# EUROPEAN PATENT APPLICATION

(11) **EP 4 606 505 A1**
(43) Date of publication of application: **27.08.2025**
(21) Application number: 24875681.9
(22) Date of filing: 25.09.2024
(51) Int. Cl.: B23D 65/00, B23K 26/354

(54) **PROCESS FOR MACHINING SAW TEETH BY MEANS OF CIRCULAR-ARC LIGHT PATH**

(30) Priority: 31.10.2023 CN 202311425434
(71) Applicant: Linyi Youcheng Saw Technology Service Co., Ltd, Linyi, Shandong 276000 (CN)
(72) Inventor: WEI, Yunkai, Linyi, Shandong 276000 (CN); CHEN, Yi, Linyi, Shandong 276000 (CN); ZHANG, Tingzhao, Linyi, Shandong 276000 (CN); WANG, Houyi, Linyi, Shandong 276000 (CN); LU, Zizhen, Linyi, Shandong 276000 (CN)
(74) Representative: Karakatsanis, Georgios
(86) International application number: PCT/CN2024/120974
(87) International publication number: WO 2025/092310

(57) **Abstract**

The invention discloses a circular arc optical path sawtooth machining process, and belongs to the field of machining of sawteeth of diamond circular saw blades. The circular arc optical path sawtooth machining process mainly includes: adjusting a scanning pattern of a laser galvanometer to an elongated groove-shaped structure with arcs at both ends, and adjusting the position and size of the scanning pattern according to the blank volume on the surface of the sawtooth to be machined, such that the scanning pattern covers a grinding width A of the blank volume, thereby ensuring that during grinding, each layer of the scanning pattern is arranged to grind away all of the grinding width contained in the blank volume at one time. the machining process may be used for the machining of rear angle surfaces of the sawteeth with internal corners.

## Description

### TECHNICAL FIELD

The invention belongs to the field of machining of sawteeth of diamond circular saw blades, and in particular relates to a circular arc optical path sawtooth machining process.

### BACKGROUND

The sawteeth of the existing diamond circular saw blades are mainly machined by electrical discharge grinding, and the diamond sawteeth machined by electrical discharge grinding are poor in profile and are not capable of satisfying the requirements of high-precision saw blades. Secondly, a PCD layer of the sawtooth has poor conductivity or is even non-conductive, thereby resulting in low machining efficiency of electrical discharge grinding.

In order to improve the machining efficiency and machining precision of the sawteeth of the diamond circular saw blade, the applicant of this case has applied for an invention patent with an authorization publication number of CN115647478B and entitled "Method for Machining PCD Saw Blade Using Laser Grinding". In the method, sawteeth of the diamond saw blade are machined in three separate processes, wherein the rear angle surface and the side surface of a sawtooth may be machined simultaneously by two laser machining devices, or the rear angle surface and the side surface of the sawtooth may be machined separately by one laser machining device in no particular sequence, and finally finish machining is performed on a cutting edge of the sawtooth, so as to grind away all the blank volume of the sawtooth, and at the same time, the cutting edge of the sawtooth with a circular arc structure is ground into a sharp-angled structure.

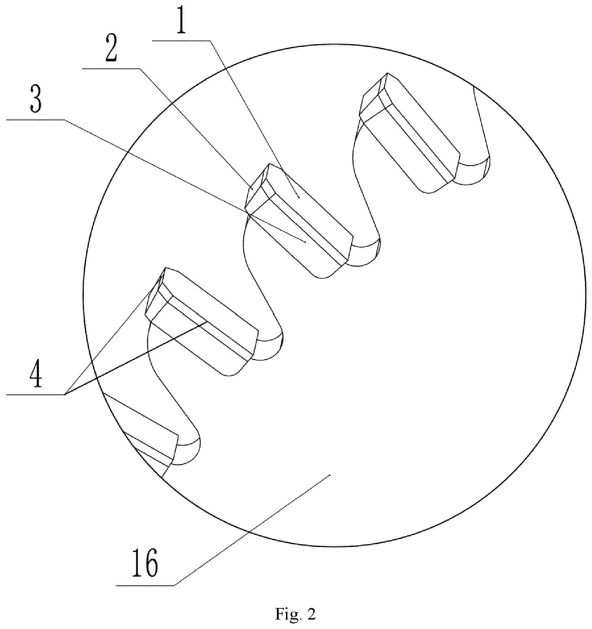

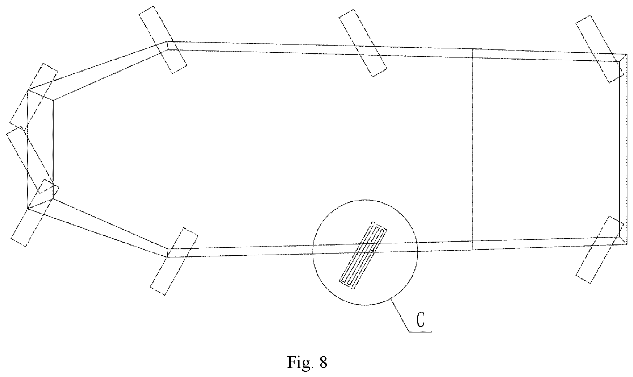

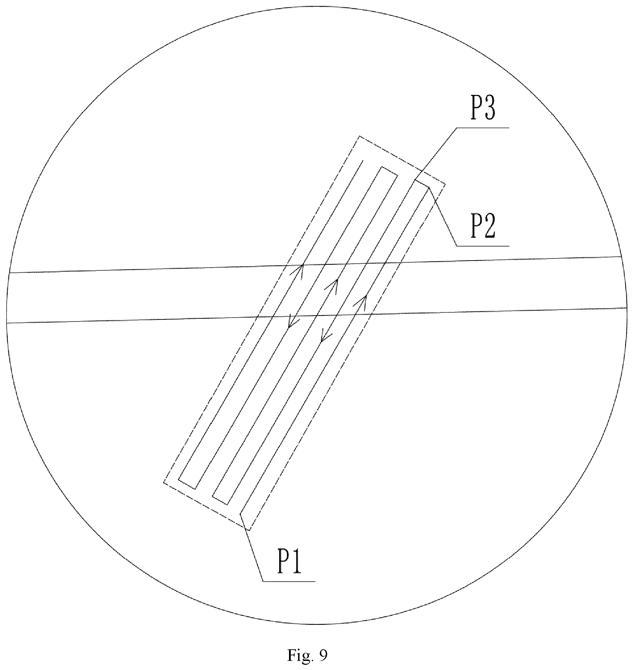

In the above patent, laser is used to machine sawteeth, so as to improve the machining efficiency and machining precision of the sawteeth, however, the above patent still has the following defects during actual machining:
1. as shown in Fig. 8 and Fig. 9, when laser is used to machine the side surface of the sawtooth and perform reverse finish machining, the laser needs to move back and forth along a corresponding scanning pattern until the laser scans the area in which the entire scanning pattern is located. As shown in Fig. 2, during a movement process of the laser from point P1 to point P2, the laser gradually accelerates from a speed of 0, and when the laser approaches the point P2, the speed of the laser is reduced to 0, afterwards, the laser converts its direction to move towards point P3, similarly, the laser accelerates gradually from a speed of 0, and then the speed of the laser is reduced to 0 at point P3, and so on. In this process, the laser focus has a short residence time at points P2 and P3, thereby easily leading to burns of a cutter head of the sawtooth, and greatly reducing machining precision and product quality of saw blades;
2. since the rear angle of the sawtooth has diversified shapes, the scanning pattern may not be accurately projected onto the rear angle of the sawtooth for machining, therefore, the rear angle of the sawtooth may not be machined through the machining manner, and the overall machining efficiency of the sawtooth is influenced; and
3. in the prior art, the laser machines products using circular apertures, while the rear angle of the sawtooth has diversified shapes, such as the tooth-shaped structure disclosed in the patents with authorization publication numbers of CN218657117U and CN218873977U, wherein the tooth-shaped structure has many inflection points, the circular aperture may not grind away the width of the blank volume of the sawtooth in one time, and precision machining of inflection points of the sawtooth is ensured.

### SUMMARY

The technical problem to be solved by the invention is as follows: in order to overcome the shortcomings of the prior art, a circular arc optical path sawtooth machining process is provided. The process realizes the machining of various tooth shapes of sawtooth rear angles, and is suitable for laser rough machining and laser finish machining of the rear angle surface and two side surfaces of the sawtooth, thereby grinding away the width of the blank volume of the sawtooth at one time while ensuring the machining precision, and greatly improving the machining efficiency.

The circular arc optical path sawtooth machining process includes following steps:
S1. mounting a diamond saw blade into a laser machining device and fixing the diamond saw blade;
S2. adjusting relative positions of a laser galvanometer and the diamond saw blade, such that a laser beam emitted by the laser galvanometer falls on an upper end of a surface of a sawtooth to be machined;
S3. adjusting the angle of the laser galvanometer, such that an included angle a formed between the laser beam emitted by the laser galvanometer and the surface of the sawtooth to be machined is controlled to be in a range of 5° to 20°;
S4. adjusting a scanning pattern of the laser galvanometer to an elongated groove-shaped structure with arcs at both ends, and adjusting the position and size of the scanning pattern according to the blank volume on the surface of the sawtooth to be machined, such that the scanning pattern is arranged to cover the grinding width A of the blank volume, thereby ensuring that during grinding, each layer of the scanning pattern is arranged to grind away all of the grinding width contained in the blank volume at one time; and
S5. machining of the first layer: adjusting relative positions of the laser beam and the surface of the sawtooth to be machined, such that a front end of the scanning pattern falls on an innermost side of the blank volume, determining a scanning path according to the shape of the surface of the sawtooth to be machined, starting a laser, controlling, by the laser galvanometer, the laser beam to always scan cyclically according to the scanning pattern, and at the same time, adjusting in real time, by the laser machining device, relative positions of the laser galvanometer and the diamond saw blade, such that the laser beam grinds from one end of the surface of the sawtooth to be machined to the other end along the scanning path, wherein the grinding depth is recorded as B, the movement speed of the laser beam along the scanning path is in a range of 0.3 mm to 5mm, and when the laser beam finishes grinding the other end of the surface of the sawtooth to be machined, the machining of the first layer of the surface of the sawtooth to be machined is completed.

Preferably, in S1, the diamond saw blade is mounted in a reverse direction into the laser machining device, i.e., an orientation of a front angle surface of the sawtooth close to the laser beam is the same as an emission direction of the laser beam.

Preferably, in S1, the diamond saw blade is mounted in a forward direction into the laser machining device, i.e., the orientation of the front angle surface of the sawtooth close to the laser beam is opposite to the emission direction of the laser beam.

Preferably, the circular arc optical path sawtooth machining process further includes following steps:
S6. machining of the second layer: adjusting the laser galvanometer to move downwards by a distance B, and at the same time controlling the included angle a formed between the laser beam and the surface of the sawtooth to be machined to always satisfy the requirements of S3, adjusting the relative positions of the laser galvanometer and the diamond saw blade, such that the laser beam grinds from the other end of the surface of the sawtooth to be machined to the direction of an initial end along the scanning path, until the machining of the second layer of the surface of the sawtooth to be machined is completed; and
S7. repeating the actions of S5 and S6 until the machining of the entire surface of the sawtooth to be machined is completed.

Preferably, the circular arc optical path sawtooth machining process further includes following steps:
S6. turning off the laser, controlling, by the laser machining device, the laser galvanometer to return to an initial end of the machining by the laser beam in step 5 by a shortest distance, and at the same time adjusting the laser galvanometer to move downwards by a distance B, wherein the included angle a formed between the laser beam and the surface of the sawtooth to be machined always satisfies the requirements of S3, and repeating the action of S5 until the machining of the second layer of the surface of the sawtooth to be machined is completed; and
S7. repeating the action of S6 until the machining of the entire surface of the sawtooth to be machined is completed.

Preferably, after the scanning pattern is determined by the laser galvanometer in S4, the laser beam emitted by the laser galvanometer scans along the scanning pattern for one circle, then the laser beam continues to scan along an internal isometric line of the previous scanning pattern for another circle, and scans cyclically for a plurality of times.

Preferably, in S4, the laser beam cyclically scans twice.

Preferably, each circle of the laser beam in S4 moves towards an inner portion of the scanning pattern by 0.01 mm to 0.04 mm.

Preferably, in S1, the laser machining device is a vertical laser machining device or a horizontal laser machining device.

Preferably, a movement speed of a beam focus is 400 mm/s to 1600 mm/s, a laser frequency is 40 kHz to 200 kHz, and a pulse width is 30 ns to 500 ns.

Compared with the prior art, the invention has the following beneficial effects:
1. In the invention, an elongated groove-shaped structure with arcs at both ends is taken as a scanning pattern, two arcs of the elongated groove-shaped structure are connected by a connecting line, and the connecting line may be a straight line or a curved line, and the elongated groove-shaped structure may be applied to the machining of the rear angle surfaces of the sawteeth with a variety of structures through the arcs at both ends, such that the machining process may be used for the machining of the rear angle surfaces of the sawteeth with internal corners, and is also suitable for the machining of the side surfaces of the sawteeth and for finish machining of the sawteeth. The universality is stronger.
2. The laser focus scans circularly along the scanning pattern of an elongated groove-shaped structure, the laser focus is always in a state of uniform speed in the entire scanning process, without acceleration, deceleration, and waiting time, thereby avoiding the possibility of burning the sawteeth and improving the product quality; secondly, the cutting edge may be machined in any part of the scanning pattern of the elongated groove-shaped structure. Compared with the original machining technology in which only the middle portion of the scanning pattern may be used for finish machining of the cutting edge, the operation flexibility of the invention is higher.

### BRIEF DESCRIPTION OF THE DRAWINGS

Fig. 1 is a structural schematic diagram of a diamond saw blade in the prior art;
Fig. 2 is a partial enlarged view of part A in Fig. 1;
Fig. 3 is a schematic diagram of an overall structure of the sawtooth;
Fig. 4 is a left-view schematic diagram of the sawtooth;
Fig. 5 is a top-view schematic diagram of the sawtooth;
Fig. 6 is a partial enlarged view of part B in Fig. 5;
Fig. 7 is a front-view schematic diagram of the sawtooth;
Fig. 8 is a schematic diagram showing finish machining of the sawtooth after a diamond saw blade is mounted in a reverse direction in the prior art;
Fig. 9 is a partial enlarged view of part C in Fig. 8;
Fig. 10 is a structural schematic diagram of a four-axis laser machining device in the prior art;
Fig. 11 is a structural schematic diagram of a five-axis laser machining device in the prior art;
Fig. 12 is a process flow diagram of the invention.

Reference numerals in the figures: 1, front angle surface of the sawtooth; 2, rear angle surface of the sawtooth; 3, side surface of the sawtooth; 4, cutting edge; 5, PCD layer; 6, alloy layer; 7, blank volume; 8, laser beam; 9, scanning pattern; 901, arc; 902, connecting line; 10, lifting mechanism; 11, translation mechanism I; 12, saw blade rotating mechanism; 13, laser galvanometer; 14, saw blade clamping cylinder; 15, translation mechanism II; 16, diamond saw blade.

### DETAILED DESCRIPTION OF THE EMBODIMENTS

The invention is further described below in combination with the accompanying drawings:
the orientation nouns involved in the paragraphs for detailed illustration are merely for the convenience of those skilled in the art to understand the technical solutions described in the present application according to the visual orientation shown in the accompanying drawings. Unless otherwise specified and defined, the terms "setting", "mounting", "connection" and the like should be understood in a broad sense, and for those skilled in the art, specific meanings of the terms in the invention may be understood according to specific circumstances.

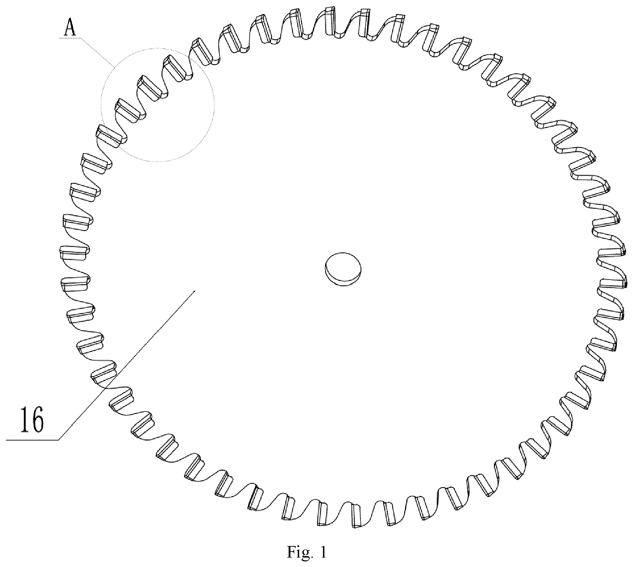

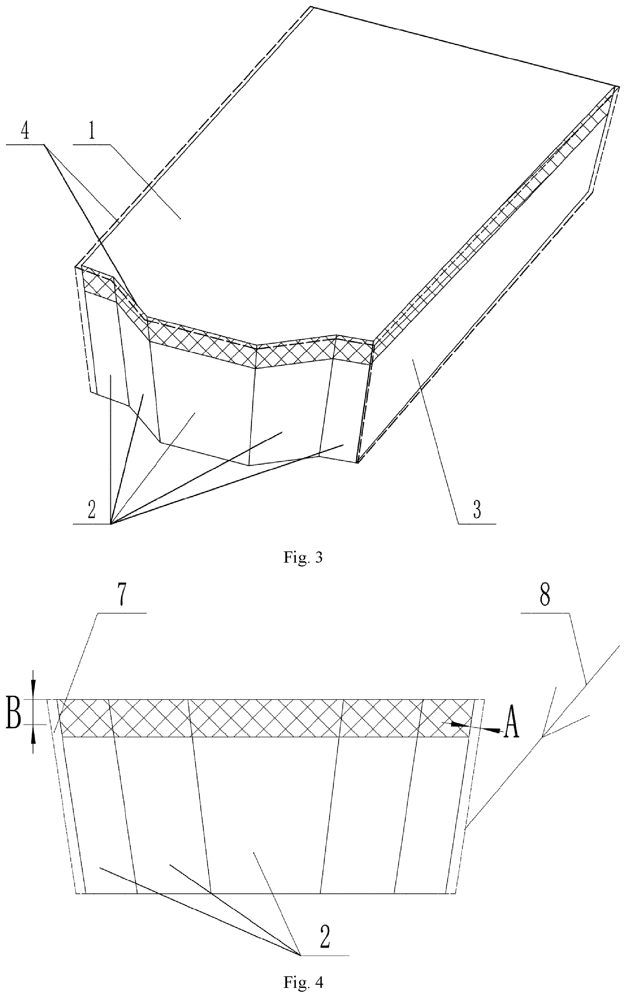

As shown in Fig. 1 and Fig. 2, a plurality of sawteeth used for cutting are fixed on a periphery of the diamond saw blade 16, and the sawteeth are cut mainly relying on a cutting edge 4 formed between the front angle surface 1 of the sawtooth and the rear angle surface 2 of the sawtooth and two side surfaces 3 of the sawtooth. Wherein the sawtooth includes an alloy layer 6 and a PCD layer 5 mainly used for cutting, and the alloy layer 6 is welded and fixed with the diamond saw blade 16. As shown in Fig. 3 and Fig. 4, the dashed line portion is the blank volume 7, and during machining, the blank volume 7 needs to be ground away through laser. Therefore, machining of the sawtooth includes machining of the rear angle surface 2 of the sawtooth, machining of two side surfaces 3 of the sawtooth and finish machining of the sawtooth, that is, after the diamond saw blade 16 is mounted in a reverse direction, the cutting edge 4 is machined by laser, such that the cutting edge 4 turns from a circular arc structure to a sharp-pointed structure.

Embodiment I: in this embodiment, mainly a rear angle surface 2 of the sawtooth with an asymmetric structure in the patents with authorization publication numbers of CN218657117U and CN218873977U is machined.

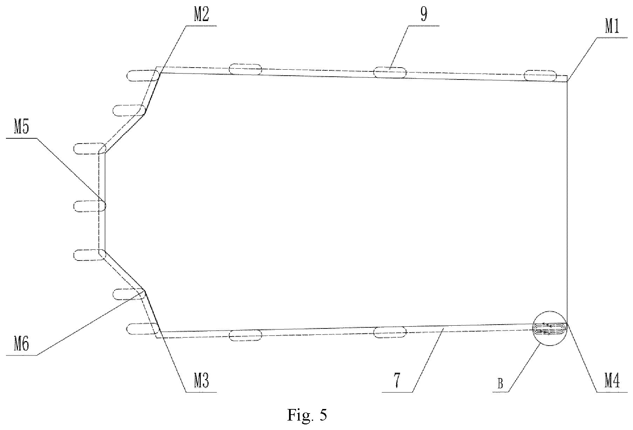

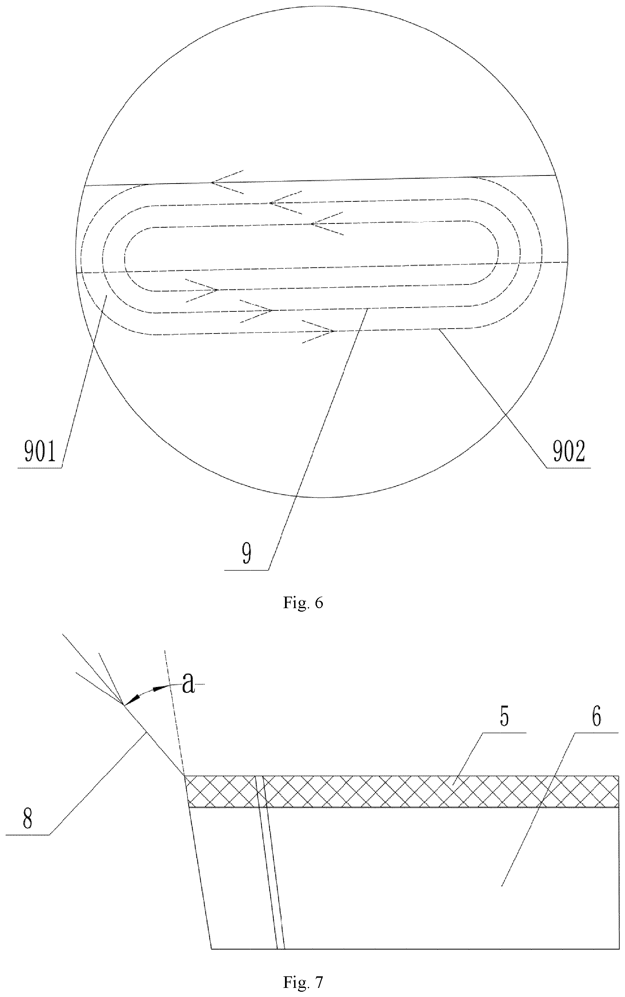

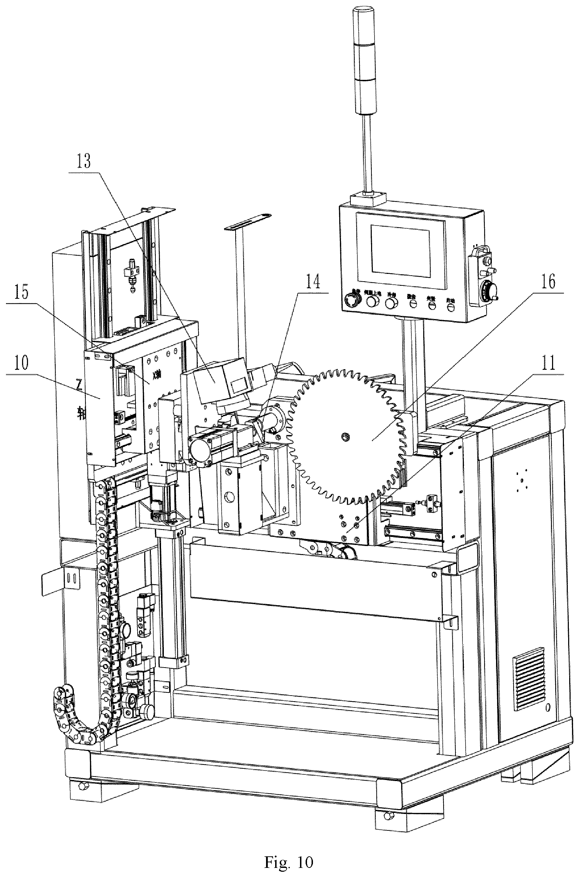

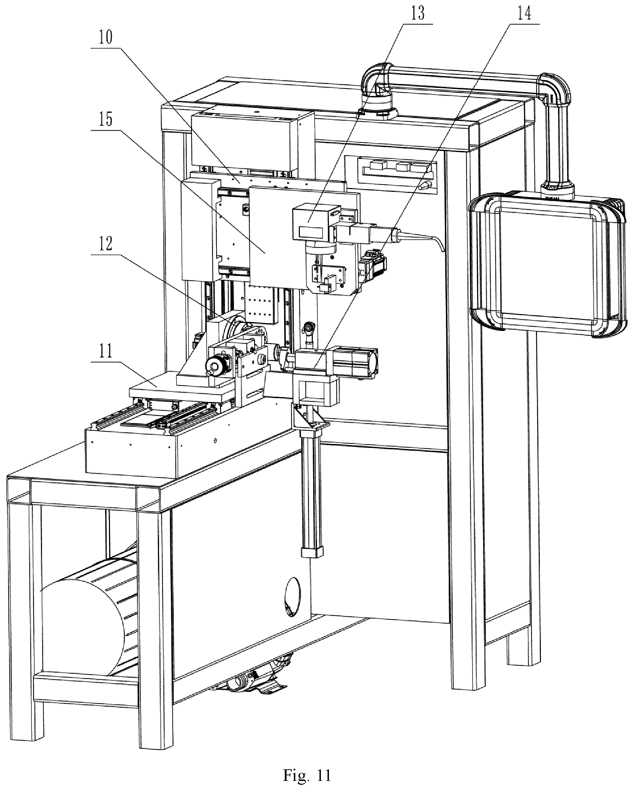

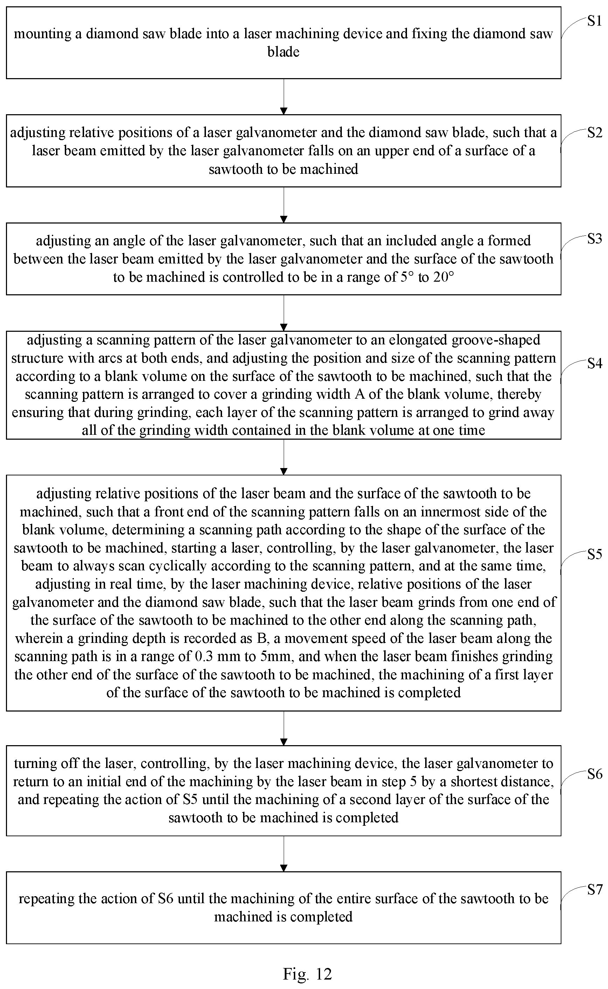

As shown in Fig. 4 to Fig. 7 and Fig. 12, the circular arc optical path sawtooth machining process includes following steps:
S1. mounting the diamond saw blade 16 into a laser machining device in a forward direction and fixed the diamond saw blade 16, wherein the orientation of the front angle surface 1 of the sawtooth close to the laser beam 8 is opposite to the emission direction of the laser beam 8; the laser machining device adopts a vertical laser machining device or a horizontal laser machining device; in this embodiment, a four-axis or a five-axis laser machining device as shown in Fig. 10 and Fig. 11 is adopted, during mounting, after the diamond saw blade 16 is hanged, the diamond saw blade 16 is clamped and fixed through a saw blade clamping cylinder 14, at this time, it is necessary to ensure that the front angle surface 1 of the sawtooth is opposite to the emission direction of the laser beam 8 emitted by the laser galvanometer 13.
S2. adjusting relative positions of the laser galvanometer 13 and the diamond saw blade 16 by controlling a lifting mechanism 10, a translation mechanism I 11 and a translation mechanism II 15 of the laser machining device, such that the laser beam 8 emitted by the laser galvanometer 13 falls on an upper end of a surface of the sawtooth to be machined.
S3. adjusting the angle of the laser galvanometer 13 by controlling the laser machining device, such that an included angle a formed between the laser beam 8 emitted by the laser galvanometer 13 and the surface of the sawtooth to be machined is controlled to be in a range of 5° to 20°; specifically, as shown in Fig. 7, the included angle a formed between the laser beam 8 and the rear angle surface 2 of the sawtooth is controlled to be in a range of 5° to 20°.
S4. as shown in Fig. 5 and Fig. 6, adjusting a scanning pattern 9 of the laser galvanometer 13 to an elongated groove-shaped structure with arcs 901 at both ends, wherein the two arcs 901 of the elongated groove-shaped structure are connected by a connecting line 902, and the connecting line 902 may be a straight line or a curved line. The position and size of the scanning pattern 9 are adjusted according to the blank volume 7 of the surface of the sawtooth to be machined, and for the tooth-shaped structure in the patents with authorization publication numbers of CN218657117U and CN218873977U, due to the existence of a plurality of M6-like points (inwardly oriented inflection points) on the rear angle surface 2 of the sawtooth, the positional relationship of the scanning pattern 9 may be adjusted, such that the arcs 901 are in contact with the rear angle surface 2 of the sawtooth, and the scanning pattern 9 is arranged to cover the grinding width A of the blank volume 7, and the size of the arc in the scanning pattern 9 is adjusted according to the machining precision of the point M6, thereby ensuring that during grinding, each layer of the scanning pattern 9 may grind away the grinding width A contained in the blank volume 7 at one time; the smaller the radius of the arc is, the higher the machining precision of the point M6 is.

In the prior art, the circular laser aperture is unable to complete the high-precision machining of the point M6 at one time, and the reason lies in that, if the grinding of the blank volume 7 needs to be completed at one time, the radius of its circular aperture needs to be adjusted larger, while the aperture with a larger radius is merely capable of machining a large circular arc structure, and is unable to complete high-precision machining of the point M6.

S5. machining of the first layer: adjusting relative positions of the laser beam 8 and the rear angle surface 2 of the sawtooth, such that the arc 901 of the scanning pattern 9 falls on an innermost side of the blank volume 7, determining a scanning path according to the shape of the surface of the sawtooth to be machined, starting a laser, controlling, by the laser galvanometer 13, the laser beam 8 to always scan cyclically according to the scanning pattern 9, wherein the movement speed of the laser beam 8 along the scanning path is in a range of 0.3 mm to 5 mm, and at the same time, adjusting in real time, by the laser machining device, relative positions of the laser galvanometer 13 and the diamond saw blade 16, such that the laser beam 8 grinds from one end of the surface of the sawtooth to be machined to the other end along the scanning path, as shown in Fig. 4, and the grinding depth is recorded as B.

As shown in Fig. 5, the rear angle surface 2 of the sawtooth is of an asymmetric structure, and the laser beam 8 moves from point M2 or M3 at any end to the other end for grinding, so as to complete the machining of the first layer of the rear angle surface 2 of the sawtooth.

S6. turning off the laser, controlling, by the laser machining device, the laser galvanometer 13 to return to an initial end of the machining by the laser beam 8 in step 5 by a shortest distance, adjusting the laser galvanometer 13 to move downwards by a distance B, and repeating the action of S5 until the machining of the second layer of the rear angle surface 2 of the sawtooth is completed; wherein in this process, the included angle formed between the laser beam 8 and the surface of the sawtooth to be machined always satisfies the requirements of S3. A one-way non-return machining method is used and may result in higher machining precision compared to back-and-forth cyclic machining.

S7. repeating the action of S6 until the machining of the entire surface of the sawtooth to be machined is completed, in this process, the movement speed of the beam focus is 400 mm/s to1600 mm/s, and the pulse width of the laser beam 8 for grinding the PCD layer 5 is 30 ns to 350 ns, and the frequency is 50 kHz to 200 kHz; and the pulse width of the laser beam 8 for grinding the alloy layer 6 is 350 ns to 500 ns, and the frequency is 40 kHz to 60 kHz.

The diamond saw blade 16 is toggled or rotated by the laser machining device by a distance of a sawtooth and the diamond saw blade 16 is fixed again, and actions of S2 to S7 are repeated until the diamond saw blade 16 is removed after the machining of all the rear angle surfaces 2 of the sawtooth on the diamond saw blade 16 is completed.

In this embodiment, after the scanning pattern is confirmed by the laser galvanometer 13 in S4, and after the laser beam 8 emitted by the laser galvanometer 13 scans along the scanning pattern 9 for one circle, then the laser beam 8 continues to scan along an internal isometric line of the previous scanning pattern for another circle, and scans cyclically for a plurality of times, preferably, the laser beam 8 cyclically scans twice, and each circle of the laser beam moves towards an inner portion of the scanning pattern by 0.01 mm to 0.04 mm.

Embodiment II: in this embodiment, mainly a rear angle surface 2 of the sawtooth with a symmetric structure in the patents with authorization publication numbers of CN218657117U and CN218873977U is machined.

In this embodiment, the rear angle surface 2 of the sawtooth is of a symmetrical structure, and the symmetrical structures on both sides are machined separately as follows:
machining of the symmetrical structure on one of the sides: moving the laser beam 8 from point M5 in the middle portion of the rear angle of the sawtooth to the point M2 or M3 at any end for grinding, and after the first layer is ground, turning off the laser, and controlling, by the laser machining device, the laser galvanometer 13 to return to the point M5 at the initial end of the machining by the laser beam 8 in S5 at a shortest distance, and adjusting the laser galvanometer 13 to move downwards by a distance B, and repeating the actions, until the grinding of the symmetrical structure on that side in the rear angle surface 2 of the sawtooth is completed; and
machining of the symmetrical structure on the other side: turning off the laser again, controlling the laser galvanometer 13 to return to point M5 at a shortest distance, starting the laser again, moving the laser beam 8 towards the other end for grinding, and repeating the actions until the laser beam 8 completes the machining of the symmetrical structure on the other side layer by layer, wherein the others are the same as those in Embodiment I.

Embodiment III: in this embodiment, mainly the side surface 3 of the sawtooth is machined.

The side surface 3 of the sawtooth is machined in the same way as the rear angle surface 2 of the sawtooth, with the following differences:
S5. machining of the first layer: as shown in Fig. 4, adjusting the relative positions of the laser beam 8 and the side surface 3 of the sawtooth on any side, such that a front end of the connecting line 902 of the scanning pattern 9 falls on the innermost side of the blank volume 7, determining a scanning path according to the shape of the surface of the sawtooth to be machined, starting the laser, controlling, by the laser galvanometer 13, the laser beam 8 to always scan cyclically according to the scanning pattern 9, at the same time, adjusting in real time, by the laser machining device, the relative positions of the laser galvanometer 13 and the diamond saw blade 16, as shown in Fig. 5, such that the laser beam 8 grinds from a front end M3 of the side surface 3 of the sawtooth to the other end M4 along the scanning path, wherein as shown in Fig. 4, the grinding depth is recorded as B, the movement speed of the laser beam 8 along the scanning path is in a range of 0.3 mm to 5 mm, after the end M4 is ground, the laser is turned off, the laser galvanometer 13 is controlled to return to the end M3 again at a shortest distance, and the laser galvanometer 13 to adjusted to move downwards by a distance B. Then the laser galvanometer 13 is adjusted to swing by the laser machining device, such that the included angle formed between the laser beam 8 and the side surface 3 of the sawtooth on that side always satisfies the requirements of S3, and the above steps are repeated until the machining of all the side surfaces 3 of the sawtooth on that side is completed.

After the side surface 3 of the sawtooth on one of the sides has been machined, the side surface 3 of the sawtooth on the other side is machined using the same steps. The others are the same as those in Embodiment I.

Embodiment IV: in this embodiment, mainly a side surface 3 of the sawtooth and a rear angle surface 2 of the sawtooth are machined.
S6. machining of the second layer: adjusting the laser galvanometer 13 to move downwards by a distance B, and at the same time controlling the included angle a formed between the laser beam 8 and the surface of the sawtooth to be machined to always satisfy the requirements of S3, adjusting the relative positions of the laser galvanometer 13 and the diamond saw blade 16, such that the laser beam 8 grinds from the other end of the surface of the sawtooth to be machined to the direction of an initial end along the scanning path, until the machining of the second layer of the surface of the sawtooth to be machined is completed;
S7. repeating the actions of S5 and S6 until the machining of the entire surface of the sawtooth to be machined is completed.

The others are the same as those in Embodiment I, Embodiment II, and Embodiment III.

Embodiment V: in this embodiment, mainly the cutting edge 4 is subjected to finish machining.

S1. mounting the diamond saw blade 16 in a reverse direction in the laser machining device and fixing the diamond saw blade 16 by the saw blade clamping cylinder 14, i.e., an orientation of a front angle surface 1 of the sawtooth close to the laser beam 8 is the same as the emission direction of the laser beam 8.

S2. adjusting relative positions of the laser galvanometer 13 and the diamond saw blade 16 by controlling the lifting mechanism 10, the translation mechanism I 11 and the translation mechanism II 15 of the laser machining device, such that the laser beam 8 emitted by the laser galvanometer 13 falls on one end of the cutting edge 4.

S3. adjusting the angle of the laser galvanometer 13 by controlling the laser machining device, such that the included angle a formed between the laser beam 8 emitted by the laser galvanometer 13 and the cutting edge 4 is controlled to be in a range of 5° to 20°.

S4. adjusting the scanning pattern 9 of the laser galvanometer 13 to an elongated groove-shaped structure with arcs 901 at both ends, wherein the two arcs 901 of the elongated groove-shaped structure are connected by a connecting line 902, and the connecting line 902 may be a straight line or a curved line. Since during machining, the laser focus scans cyclically along the scanning pattern 9, and the laser focus is always in a state of uniform speed in the entire scanning process, without waiting time, thereby avoiding the possibility of burning the sawteeth, therefore, a cutting edge 4 may be machined in any part of the scanning pattern 9.

S5. machining of the first layer: adjusting the relative positions of the laser beam 8 and the cutting edge 4, such that the scanning pattern 9 falls on the cutting edge 4, determining the scanning path according to the shape of the cutting edge 4, starting the laser, and controlling, by the laser galvanometer 13, the laser beam 8 to scan the cutting edge 4 once, so as to complete the finish machining of the cutting edge 4, wherein in this process, the movement speed of the beam focus is 400 mm/s to 1600 mm/s, the pulse width of the laser beam 8 is 30 ns to 350 ns, and the frequency is 50 kHz to 200 kHz.

The diamond saw blade 16 is toggled or rotated by the laser machining device by a distance of a sawtooth and the diamond saw blade 16 is fixed again, and actions of S2 to S7 are repeated, and the diamond saw blade 16 is removed after the machining of all the rear angle surfaces 2 of the sawtooth on the diamond saw blade 16 is completed.

In the invention, the four-axis vertical laser machining device shown in Fig. 10 may be adopted, and for its working principles, please refer to CN218016487U. At this time, the plane where the diamond saw blade 16 is located is arranged vertically, the diamond saw blade 16 is mounted on the translation mechanism I 11 which is capable of moving along the Y axis, and the laser galvanometer 13 is mounted on the translation mechanism II 15, and the laser galvanometer 13 is arranged downwards in an inclined manner towards the side of the diamond saw blade 16, such that the included angle formed between the laser galvanometer 13 and the vertical plane is controlled to be in a range of 10° to 20°. The translation mechanism II 15 is mounted in the lifting mechanism 10 which is capable of moving up and down, and the lifting mechanism 10 and the translation mechanism II 15 are adjusted synchronously, so as to control the position of the laser galvanometer 13, and at the same time, the translation mechanism I 11 is adjusted to control the position of the diamond saw blade 16, so as to adjust the relative positions of the laser galvanometer 13 and the diamond saw blade 16.

In the invention, a five-axis vertical laser machining device shown in Fig. 11 may also be adopted, and for its working principles, please refer to CN116038154A, wherein a saw blade rotating mechanism 12 capable of driving the diamond saw blade 16 to rotate is additionally arranged on the basis of the four-axis vertical laser machining device. Through controlling the lifting mechanism 10 and the translation mechanism II 15 and through adjusting the saw blade rotating mechanism 12, the relative positions of the laser galvanometer 13 and the diamond saw blade 16 are adjusted.

A horizontal laser machining device may also be adopted in the invention, and in the horizontal laser machining device, the diamond saw blade 16 is laid flat, and the others are the same as those of the vertical laser machining device.

Finally, although the specification is described according to embodiments, not every embodiment merely contains one separate technical solution; the specification is recited merely for the sake of clarity, and those skilled in the art should treat the specification as a whole, and the technical solutions in each of the embodiments may be appropriately combined to form other embodiments understandable to those skilled in the art.

## Claims

1. A circular arc optical path sawtooth machining process, **characterized by** comprising following steps:
S1. mounting a diamond saw blade (16) into a laser machining device and fixing the diamond saw blade (16);
S2. adjusting relative positions of a laser galvanometer (13) and the diamond saw blade (16), such that a laser beam (8) emitted by the laser galvanometer (13) falls on an upper end of a surface of a sawtooth to be machined;
S3. adjusting an angle of the laser galvanometer (13), such that an included angle a formed between the laser beam (8) emitted by the laser galvanometer (13) and the surface of the sawtooth to be machined is controlled to be in a range of 5° to 20°;
S4. adjusting a scanning pattern (9) of the laser galvanometer (13) to an elongated groove-shaped structure with arcs (901) at both ends, and adjusting the position and size of the scanning pattern (9) according to a blank volume (7) on the surface of the sawtooth to be machined, such that the scanning pattern (9) is arranged to cover a grinding width A of the blank volume (7), thereby ensuring that during grinding, each layer of the scanning pattern (9) is arranged to grind away all of the grinding width contained in the blank volume (7) at one time; and
S5. machining of a first layer: adjusting relative positions of the laser beam (8) and the surface of the sawtooth to be machined, such that a front end of the scanning pattern (9) falls on an innermost side of the blank volume (7), determining a scanning path according to the shape of the surface of the sawtooth to be machined, starting a laser, controlling, by the laser galvanometer (13), the laser beam (8) to always scan cyclically according to the scanning pattern (9), and at the same time, adjusting in real time, by the laser machining device, relative positions of the laser galvanometer (13) and the diamond saw blade (16), such that the laser beam (8) grinds from one end of the surface of the sawtooth to be machined to the other end along the scanning path, wherein a grinding depth is recorded as B, a movement speed of the laser beam (8) along the scanning path is in a range of 0.3 mm to 5mm, and when the laser beam (8) finishes grinding the other end of the surface of the sawtooth to be machined, the machining of the first layer of the surface of the sawtooth to be machined is completed.

2. The circular arc optical path sawtooth machining process according to claim 1, **characterized by**: in S1, the diamond saw blade (16) is mounted in a reverse direction into the laser machining device, i.e., an orientation of a front angle surface of the sawtooth (1) close to the laser beam (8) is the same as an emission direction of the laser beam (8).

3. The circular arc optical path sawtooth machining process according to claim 1, **characterized by**: in S1, the diamond saw blade (16) is mounted in a forward direction into the laser machining device, i.e., the orientation of the front angle surface of the sawtooth (1) close to the laser beam (8) is opposite to the emission direction of the laser beam (8).

4. The circular arc optical path sawtooth machining process according to claim 3, **characterized by** further comprising following steps:
S6. machining of a second layer: adjusting the laser galvanometer (13) to move downwards by a distance B, and at the same time controlling the included angle a formed between the laser beam (8) and the surface of the sawtooth to be machined to always satisfy the requirements of S3, adjusting the relative positions of the laser galvanometer (13) and the diamond saw blade (16), such that the laser beam (8) grinds from the other end of the surface of the sawtooth to be machined to the direction of an initial end along the scanning path, until the machining of the second layer of the surface of the sawtooth to be machined is completed; and
S7. repeating actions of S5 and S6 until the machining of the entire surface of the sawtooth to be machined is completed.

5. The circular arc optical path sawtooth machining process according to claim 3, **characterized by** further comprising following steps:
S6. turning off the laser, controlling, by the laser machining device, the laser galvanometer (13) to return to an initial end of the machining by the laser beam (8) in step 5 by a shortest distance, and at the same time adjusting the laser galvanometer (13) to move downwards by a distance B, wherein the included angle a formed between the laser beam (8) and the surface of the sawtooth to be machined always satisfies the requirements of S3, and repeating the action of S5 until the machining of the second layer of the surface of the sawtooth to be machined is completed; and
S7. repeating the action of S6 until the machining of the entire surface of the sawtooth to be machined is completed.

6. The circular arc optical path sawtooth machining process according to claim 1, **characterized by**: after the scanning pattern (9) is determined by the laser galvanometer (13) in S4, the laser beam (8) emitted by the laser galvanometer (13) scans along the scanning pattern (9) for one circle, then the laser beam (8) continues to scan along an internal isometric line of the previous scanning pattern (9) for another circle, and scans cyclically for a plurality of times.

7. The circular arc optical path sawtooth machining process according to claim 6, **characterized by**: in S4, the laser beam (8) cyclically scans twice.

8. The circular arc optical path sawtooth machining process according to claim 6, **characterized by**: each circle of the laser beam (8) in S4 moves towards an inner portion of the scanning pattern (9) by 0.01 mm to 0.04 mm.

9. The circular arc optical path sawtooth machining process according to claim 1, **characterized by**: in S1, the laser machining device is a vertical laser machining device or a horizontal laser machining device.

10. The circular arc optical path sawtooth machining process according to any one of claims 1 to 9, **characterized by**: a movement speed of a beam focus is 400 mm/s to 1600 mm/s, a laser frequency is 40 kHz to 200 kHz, and a pulse width is 30 ns to 500 ns.
